# EUROPEAN PATENT SPECIFICATION

(11) **EP 0 582 633 B1**
(45) Date of publication and mention of the grant of the patent: **28.08.1996**
(21) Application number: 92910056.8
(22) Date of filing: 04.05.1992
(51) Int. Cl.: B23B 27/08, B23B 29/02

(54) **TOOL ARRANGEMENT FOR MACHINING RESTRICTED SPACES, E.G. FOR INTERNAL TURNING**
WERKZEUG FÜR DIE BEARBEITUNG SCHWERZUGÄNGLICHEN RÄUMEN, BEISPIELSWEISE FÜR INNENDREHEN
OUTIL D'USINAGE DE ZONES DIFFICILEMENT ACCESSIBLES, DESTINE A ETRE UTILISE, PAR EXEMPLE, POUR L'USINAGE INTERNE

(30) Priority: 02.05.1991 SE 9101323
(43) Date of publication of application: 16.02.1994
(60) Divisional application: 96200520.3
(73) Proprietor: MIRCONA AB, S-801 33 Gävle (SE)
(72) Inventor: MIHIC, Wlajko, S-802 67 Gävle (SE)
(74) Representative: Nordén, Ake
(86) International application number: PCT/SE92/00286
(87) International publication number: WO 92/19403

(56) References cited:
- EP-A- 0 268 001
- SE-B- 337 732
- SE-B- 373 515
- SE-B- 463 753
- US-A- 3 298 254
- US-A- 3 754 309
- US-A- 4 102 591
- US-A- 4 602 897
- US-A- 4 714 384

## Description

The invention relates to an arrangement for tools for cutting machining, in particular turning in restricted spaces, for example turning inside a hole or in a tube-like workpiece.

Tools intended for operations of this kind are previously disclosed, and as a general rule comprise a cutter of hard metal, carbide material or similar attached by means of a threaded connection to the end of a shaft or similar capable of being inserted into the hole or the tube, in which case the arrangement is such that, in order to remove a worn cutter or in order to fit a new one, it is necessary fully to unscrew a screw passing through the cutter before the cutter can be removed or attached. The fact that it is necessary to keep track not only of the cutter, which in many cases is very small, but also of a loose screw, and to fit the latter into a threaded hole in the shaft, makes the operation difficult, in addition to which there is always the risk of using a cutter for an excessive period in order to avoid having to change the cutter.

US-A-41 02 591 discloses a cutting tool comprising the features of the preamble of claim 1. This tool presents at the end of the tool holder an obliquely arranged end face, in the one direction defined by an end wall projecting perpendicularly from same end face and in the other direction defined by a curved wall, a threaded bore arranged perpendicularly inwardly from the end face and concentric with the curved wall. Part of the end face adjacent the perpendicular end wall and the end wall form a site for an insert. A screw having a conical head and threaded into the bore engages an outwardly facing complementary conically curved abutment surface of the insert to hold same against the end face and end wall. On changing inserts at this tool it is not necessary to remove the screw entirely. An insert resting against the oblique end face is supported in the one oblique direction by the end wall and in the other by the conical screw head. There exists, however, no end abutment for the rear end of the insert and the longitudinal fixation of the insert is achieved from the interaction between the conical curved recess in the one edge portion of the insert and the conical lower side of the screw head.

### Object of the invention

The object of the invention is to make available an improved arrangement which, at the same time as it provides a secure grip, also facilitates the replacement of cutters to a considerable degree, in conjunction with which no handling of loose components, apart from the cutter itself, is called for.

### Description of the invention

The idea behind the invention is the provision at the end part of the shaft of a seat, which provides positioning of, and a stable support for a cutter in at least two of the principal directions utilized in the machining operation, so that the stresses imposed on the cutter during such machining are transferred in an effective fashion to the shaft, the arrangement on the shaft of at least one tightenable fastening device which, after tightening, engages with the cutter and forces it against at least one surface on the seat, and the arrangement on the cutter of stop parts with which the fastening device is intended to engage only once the cutter, after displacement relative to the seat on the shaft and whilst still remaining in contact with it, has reached its operating position.

### Description of illustrative embodiments

The invention is described in more detail below with reference to the accompanying drawing, in which:
Fig. 1 shows a view from the side of the end part of a first embodiment of a tool arranged in accordance with the invention;
Fig. 2 shows the same tool viewed from the front;
Fig. 3 is a section taken along the line A-A in Fig. 2; and
Fig. 4 is a section taken along the line B-B in Fig. 2;

The designation 1 is used in the drawing in respect of the end part of the shaft of a tool holder, which is intended to carry a tool and, more specifically, a cutter generally designated by 2. The tool in question here is intended for turning in restricted spaces, for example inside a hole, or in a tube-like workpiece or similar.

The shaft 1, which may be of circular cross-section along a further part 3 indicated by a dashed and dotted line, exhibits a thinner end part 4 of non-round cross-section produced by turning off on one side. Arranged on or at the end surface 5 is a transverse groove 6 terminated by a curved end wall 7, and situated next to it in a partially overlapping relationship is a circular recess 8 with a coaxially threaded central bore 9 arranged in the longitudinal direction of the shaft.

The cutter 2 is bar-shaped with a rounded inner end 10 and a laterally displaced projection 12 at the other end for supporting the edge 11. A corner is chamfered in connection with the inner end on the base part 13 of the cutter, which is of essentially rectangular cross-section, so as to produce an inclined surface 14. The opposite corner, which connects the sides 15 and 16 of the cutter, exhibits a small chamfer 17, which means that a longitudinal clearance occurs between the walls 18 and 19 of the transverse groove 6 and the opposing lateral surfaces 15 and 16 of the cutter. Shallow recesses 20 and 21 are arranged on the aforementioned downward and inward facing sides 15 and 16 of the cutter 2, so that only end heels 22 and 23 remain. The purpose of the clearance at 17 and the aforementioned heels is that the cutter must be capable of resting in a stable fashion against the walls 20 and 21 of the groove.

The fastening element, which is designated by 24, consists of a screw with a threaded shaft part 25 which engages with the threaded central bore 9, a cylindrical transitional part 26 and a cylindrical head 27 with a conical underside 28 forming essentially the same angle with the longitudinal axis of the supporting shaft as the inclined surface 14 on the cutter 2.

When fitting a cutter 2, the fastening element 24, i.e. the screw, must be loosened slightly so that the rear end part of the cutter 2 can be displaced laterally into the groove 5 for such a distance that it bottoms against the end of the groove at the point 7, in conjunction with which the inclined surface 14 will slide in beneath the inwardfacing conical surface 28 of the screw head 27. As the screw 24 is tightened, the conical surface 28 will engage with the inclined surface 14 of the cutter and will force it inwards so that the heels 22 and 23 come into stable contact with the sides 18 and 19 of the groove.

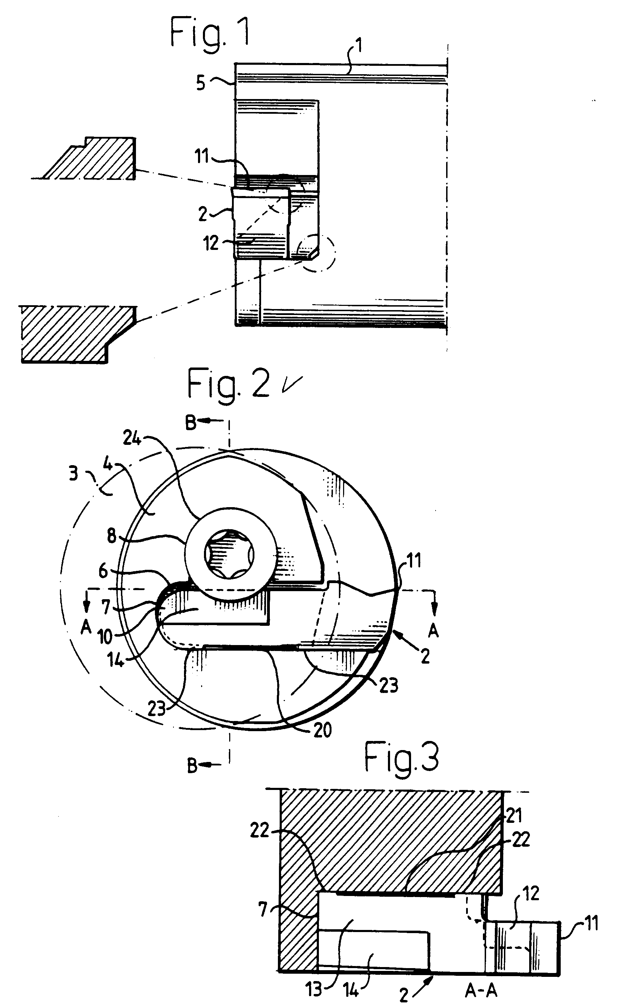

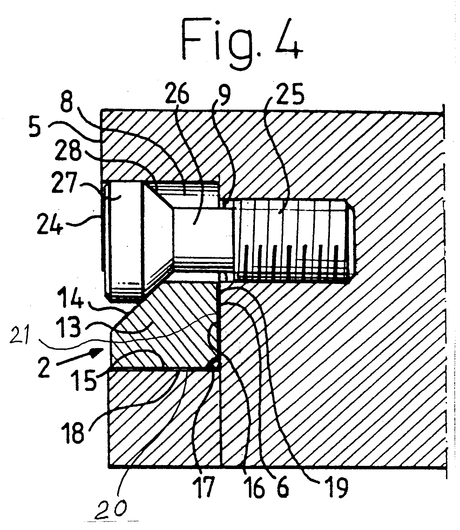

The screw may have a right-hand or a left-hand thread, depending on the intended direction of working of the cutting edge 11, so that as vibrations arise, the screw does not exhibit a tendency to turn in a direction which causes the cutter to move out of the groove 4. The screw 24 may have a left-hand thread in the embodiment shown in Figs. 1-4.

The simple handling facilitates cutter replacement to a considerable degree, and it should be noted that the new embodiment is in no way more bulky than the previously disclosed designs.

## Claims

1. Arrangement for tools for cutting machining, in particular for machining in restricted spaces such as internally in holes and inside hollow workpieces, utilizing a cutter holder and a cutter insert attached to the holder at one free end of the holder shaft, which cutter insert is held in position on the shaft end by means of a threaded fastening device, or the like, the holder shaft end (1,31) being provided with a transverse groove localized at the free end face of the holder shaft, with at least two abutment means (18,19), cooperating with at least two engagement portions (15,16) on a cutter insert (2), for stabilizing the insert against the cutting machining operation stresses, the cutter insert (2) also being provided with contact means (14) arranged to be engaged by at least one fastening device (24) in the form of a screw (24) provided with a cylindrical head with a shape and size closely adhering to the shape and size of a mouth portion of a recess in the cutter holder axial with and merging into a threaded bore, and provided with, between said cylindrical head and a threaded shaft portion, an inclined or conical all-round contact surface (28) on the screw shaft side of the head, arranged at the end of the holder shaft so as to stabilize the cutter insert in its holder shaft engaging position,
***characterized*** in that the transverse groove (6), is open in one lateral sense and closed in the other, and includes sides forming the abutment means (18,19) situated in the axial and radial planes, in that next to said groove is arranged essentially axially said threaded bore (9) for the threaded fastening device, in that the cutter insert, to be received at the abutment means of the transverse groove (16), has opposite its engagement portions an obliquely arranged contact surface for cooperation with the conical all-round contact surface of the screw, when the cutter insert is localized inside the groove and on tightening of the screw, and in that each of the engagement portions of the cutter insert exhibits long shallow recesses (20,21) separating supporting heels (22,23) adjacent the ends of the respective engagement portions, said heels together with the conical screw surface engaging the obliquely arranged surface, on tightening of the screw secure a stable movement-free clamping of the insert towards the cutter holders.

2. Arrangement in accordance with Patent Claim 2,
***characterized*** in that the outwardly facing contact surface of the cutter insert is inclined essentially at the same angle as the conical all around contacts surface (28) of the fastening device (24) screw.

## Patentansprüche

1. Werkzeuganordnung für eine Schneidbearbeitung, insbesondere für eine Bearbeitung in schwer zugänglichen Räumen, wie etwa im Innenraum von Löchern und innerhalb hohler Werkstücke, bei der ein Schneidenhalter und ein an einer freien Stirnfläche des Halterschaftes an dem Halter angebrachter Schneideneinsatz verwendet werden, wobei der Schneideneinsatz mit Hilfe einer mit einem Gewinde versehenen Befestigungsvorrichtung oder dergleichen auf dem Schaft in Stellung gehalten wird, das Halterschaftende (1, 31) mit einer an der freien Stirnfläche des Halterschaftes angeordneten quer verlaufenden Nut mit mindestens zwei Wiederlagereinrichtungen (18, 19) versehen ist, die mit mindestens zwei Eingriffsbereichen (15, 16) auf einem Schneideneinsatz (2) zusammenwirken, zum Stabilisieren des Einsatzes bei Beanspruchungen im Verlauf eines Schneidbearbeitungsvorgangs, wobei der Schneideneinsatz (2) ferner mit einer Kontakteinrichtung (14) versehen ist, die für einen Eingriff mit mindestens einer Befestigungsvorrichtung (24) in Form einer Schraube (24) angeordnet ist, die mit einem zylindrischen Kopf, mit einer eng an die Form und Größe eines Mündungsbereichs einer Ausnehmung in dem Schneidenhalter, die coaxial zu einer mit einem Gewinde versehenen Bohrung verläuft und in diese ausläuft, angelehnten Form und Größe versehen ist, und ferner zwischen dem zylindrischen Kopf und einem mit einem Gewinde versehenen Schaftbereich eine schräg verlaufende oder konisch umlaufende Kontaktfläche (28) auf der Schraubenschaftseite des Kopfes aufweist, wobei die Befestigungsvorrichtung am Ende des Halterschaftes angeordnet ist, um den Schneideneinsatz in seiner Halterschafteingriffsposition zu stabilisieren,
dadurch gekennzeichnet, daß die quer verlaufende Nut (6) in einer seitlichen Richtung offen und in der anderen geschlossen ist und in einer Axialebene und einer Radialebene die Wiederlagereinrichtungen (18, 19) bildende Seitenflächen enthält, daß neben der Nut, im wesentlichen axial verlaufend, die mit einem Gewinde versehene Bohrung (9) für die mit einem Gewinde versehene Befestigungsvorrichtung angeordnet ist, daß der an den Wiederlagereinrichtungen der quer verlaufenden Nut (6) aufzunehmende Schneideneinsatz an seiner den Eingriffsbereichen entgegengesetzten Seite eine schräg verlaufend angeordnete Kontaktfläche aufweist, die mit der konisch umlaufenden Kontaktfläche der Schraube zusammenwirkt, wenn der Schneideneinsatz in der Nut angeordnet ist und die Schraube angezogen wird, und dadurch, daß jeder Eingriffsbereich des Schneideneinsatzes eine lange, flache Ausnehmung (20, 21) aufweist, mit der den Enden der jeweiligen Eingriffsbereiche benachbarte Trägerabsätze (22, 23) voneinander getrennt werden, wobei die Absätze zusammen mit der konischen Schraubenfläche beim Anziehen der Schraube in Eingriff mit der schräg verlaufend angeordneten Fläche gelangen und ein stabiles, bewegungsfreies Klemmen des Einsatzes gegen die Schneidenhalter sicherstellen.

2. Anordnung nach Anspruch 2 (richtig: 1), dadurch gekennzeichnet, daß die nach außen weisende Kontaktfläche des Schneideneinsatzes im wesentlichen mit demselben Winkel geneigt ist wie die konisch umlaufende Kontaktfläche (28) der Schraube der Befestigungsvorrichtung (24).

## Revendications

1. Disposition d'outils d'usinage par découpe, en particulier pour un usinage de zones difficilement accessibles telles qu'à l'intérieur de trous et à l'intérieur de pièces d'ouvrage creuses, en utilisant un support de couteau et un encastrement de couteau fixé au support à une extrémité libre de l'arbre du support, encastrement de couteau qui est maintenu en place sur l'extrémité de l'arbre au moyen d'un dispositif de fixation fileté, ou analogue, l'extrémité (1, 31) de l'arbre du support présentant une rainure transversale localisée sur la face d'extrémité libre de l'arbre du support avec au moins deux moyens de butée (18, 19) coopérant avec au moins deux parties de prise (15, 16) sur un encastrement de couteau (2), afin de stabiliser l'encastrement à l'encontre des contraintes de fonctionnement de l'opération d'usinage par découpe, l'encastrement de couteau (2) présentant également des moyens de contact (14) prévus pour être engagés par au moins un dispositif de fixation (24) présentant la forme d'une vis (24) à tête cylindrique d'une forme et d'une dimension épousant étroitement la forme et la dimension d'une partie d'embouchure d'un évidement du support de couteau coaxial à un alésage fileté et correspondant à celui-ci, et présentant, entre ladite tête cylindrique et une partie de tige filetée, une surface de contact ronde inclinée ou conique (28) prévue sur le côté de tige de vis de la tête, ce dispositif de fixation étant prévu à l'extrémité de l'arbre du support afin de stabiliser l'encastrement de couteau dans sa position de prise avec l'arbre du support, **caractéri sé** en ce que la rainure transversale (6) est ouverte dans une direction latérale et fermée dans l'autre et comprend des côtés constituant les moyens de butée (18, 19) situés dans le plan axial et le plan radial, en ce que près de ladite rainure est axialement monté ledit alésage fileté (9) pour le dispositif de fixation fileté, en ce que l'encastrement de couteau, devant être reçu sur les moyens de butée de la rainure transversale (16), présente à l'opposé de ses parties de prise une surface de contact prévue obliquement pour coopérer avec la surface de contact ronde conique de la vis lorsque l'encastrement de couteau est localisé à l'intérieur de la rainure et lors du serrage de la vis, et en ce que chacune des parties de prise de l'encastrement de couteau présente de longs évidements peu profonds (20, 21) séparant des talons de support (22, 23) adjacents aux extrémités des parties de prise respectives, lesdits talons, en même temps que la surface conique de la vis venant en prise avec la surface prévue obliquement lors du serrage de la vis, assurent un serrage stable sans mouvement de l'encastrement en direction des supports de couteaux.

2. Dispositif selon la revendication 1, **caractéri sé** en ce que la surface de contact de l'encastrement de couteau qui est dirigée vers l'extérieur est inclinée sensiblement du même angle que la surface de contact ronde conique (29) de la vis du dispositif de fixation (24).
